# EUROPÄISCHE PATENTSCHRIFT

(11) **EP 1 481 407 B1**
(45) Veröffentlichungstag und Bekanntmachung des Hinweises auf die Patenterteilung: **03.05.2006**
(21) Anmeldenummer: 03701535.1
(22) Anmeldetag: 22.01.2003
(51) Int. Cl.: H01F 38/18

(54) **ÜBERTRAGER**
TRANSLATOR
TRANSFORMATEUR

(30) Priorität: 30.01.2002 DE 10203651
(43) Veröffentlichungstag der Anmeldung: 01.12.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2003/000578
(87) Internationale Veröffentlichungsnummer: WO 2003/065389

(56) Entgegenhaltungen:
- EP-A- 0 688 028
- DE-A- 10 020 949
- DE-C- 19 953 583
- US-A- 5 608 771

## Beschreibung

Die vorliegende Erfindung betrifft einen Übertrager zur Übertragung elektrischer Energie von einem stehenden Teil auf ein drehendes Teil, mit einer Primärwicklung und einer Sekundärwicklung. Solche Übertrager sind als Asynchronmaschinen bekannt, bei denen die Ständerwicklung die Primärwicklung und die Läuferwicklung die Sekundärwicklung bildet oder vice versa. Dabei ist die bei der Übertragung auftretende Verlustwärme, die infolge von Ummagnetisierungsverlusten auftritt, so beträchtlich, dass einerseits die übertragbare Leistung auf den Bereich einiger kW begrenzt ist. Andererseits muss diese Wärme abgeführt werden und erfordert somit eine bestimmte minimale Baugröße, bei der sich eine ausreichend große Oberfläche ergibt.

Aus der DE 199 53 583 C1 ist ein Drehstromtransformator zur bürstenlosen und schielfringlosen Übertragung der Schlupfleistung vom Rotor einer Asynchronmaschine auf ein feststehendes Maschinenteil bekannt. Dieser besteht aus einem feststehenden Primärteil und einem auf der Welle der Asynchronmaschine angebrachten rotierenden Sekundärteil. Beide Teile tragen dabei eine Drehstromwicklung mit tangential gewickelten Spulen.

Aus der DE 198 42 948 A1 ist ein Elektromotor sowie ein Herstellverfahren eines Blechpakets eines Stators eines Elektromotors bekannt.

Aus der DE 100 20 949 A1 das als nächstliegender Stand der Technik angesehen wird ist ein Kontaktloser Transformator bekannt, bei der jeder Magnetkern aus einer scheibenförmig angeordneten Kombination einer Vielzahl fächerförmiger Teilkerne besteht. Diese Magnetkerne weisen jeweils wenigstens eine konzentrische und eine radiale Nut auf zur Aufnahme der Wicklungen.

Aus der EP 0 688 028 A1 ist ein elektromagnetischer Koppler zur Energieübertragung bekannt. Sowohl Primär-Kreis als auch Sekundär-Kreis beinhalten eine ringförmige Kernanordnung, die mit ringförmigen Vertiefungen versehen ist, in denen Ringspulen verlaufen. Die Kernanordnung besteht aus wenigstens einem Paket mit geschichteten Transformatorblechen.

Aus der US 5,608,771 ist ein Transformator für ein CT-System bekannt. Sowohl Stator-Kern als auch Rotor-Kern sind jeweils einstückig ausgebildet und weisen mindestens eine ringförmig verlaufende Nut zur Aufnahme von Wicklungen auf.

Aus der DE 42 14 376 A1 ist ein magnetisches Material für leistungsübertragerkeme bekannt mit geringer Permeabilität und geringer Verlustleistung in Form einer homogenen Zusammensetzung aus Ferrit und Kunststoff.

Aufgabe der vorliegenden Erfindung ist es, einen Übertrager anzugeben, bei dem die auftretende Verlustwärme verringert ist und der daher entweder kleinere Abmessungen aufweisen oder bei gleichen Abmessungen größere Leistungen übertragen kann.

Diese Aufgabe wird durch einen Übertrager gemäß Anspruch 1 gelöst.

Dabei liegt der Erfindung die Erkenntnis zugrunde, dass bei bekannten Rotationsmaschinen, wie Asynchronmaschinen, die Bautiefe wesentlich zum Problem der Wärmeabfuhr beiträgt. Dies bedeutet im Umkehrschluss, dass sich ein wesentlicher Teil des Problems der Wärmeabfuhr durch eine möglichst flache Bauform lösen lässt.

Erfindungsgemäß weist der Übertrager einen aus kreisringsegmentförmig ausgebildeten Formstücken gebildeten Rotationskörper mit in axialer oder radialer Richtung offenen Nuten auf, wobei das Material der Formstücke vorzugsweise Ferrit ist. Auf diese Weise lässt sich ein Rotationskörper mit günstigen magnetischen Eigenschaften und ohne Luftspalte schaffen, der eine besonders verlustarme Übertragung der Leistung gestattet.

Um an dem Übertrager auftretende Kräfte von dem Rotationskörper fernzuhalten und damit dessen Verformung bzw. Beschädigung zu vermeiden, ist eine die Formstücke aufnehmende Tragstruktur vorgesehen.

Bei einer mit einem erfindungsgemäßen Übertrager ausgerüsteten Windenergieanlage kann z. B. die Erregerleistung vom stehenden Teil der Windenergieanlage zum drehenden Teil wie dem Läufer des Generators übertragen werden. Natürlich können für eine mehrphasige Übertragung auch mehrere Übertrager nebeneinander verwendet werden.

Für den Betrieb eines erfindungsgemäßen Übertragers hat sich eine Frequenz von bis zu 300 kHz, bevorzugt von etwa 20 kHz als vorteilhaft erwiesen, um die Wirkung der Induktivität und die Verluste gering zu halten.

Vorteilhafte Weiterbildungen der Erfindung sind in den Unteransprüchen angegeben. Im Folgenden wird die Erfindung anhand der Figuren näher eriäutert. Dabei zeigen:
- Figur 1: eine Seitenansicht einer ersten Ausführungsform eines Rotationskörpers;
- Figur 2: ein einzelnes Segment des Rotationskörpers in Figur 1;
- Figur 3: eine Querschnittsansicht entlang der Linie A-A in Figur 1;
- Figur 4: eine Seitenansicht einer zweiten Ausführungsform des Rotationskörpers;
- Figur 5: eine Querschnittsansicht der zweiten Ausführungsform des Rotationskörpers entlang der Linie B-B in Figur 4;
- Figur 6: eine perspektivische Darstellung der Anordnung der beiden Rotationskörper,
- Figur 7: eine quergeschnittene Teilansicht der Anordnung der Rotationskörper;
- Figur 8: eine quergeschnittene Teilansicht einer alternativen Anordnung der Rotationskörper;
- Figur 9: eine perspektivische Darstellung eines Formstückes für einen der Rotationskörper in Figur 8;
- Figur 10: eine perspektivische Darstellung eines Formstückes für den anderen in Figur 8 dargestellten Rotationskörper.

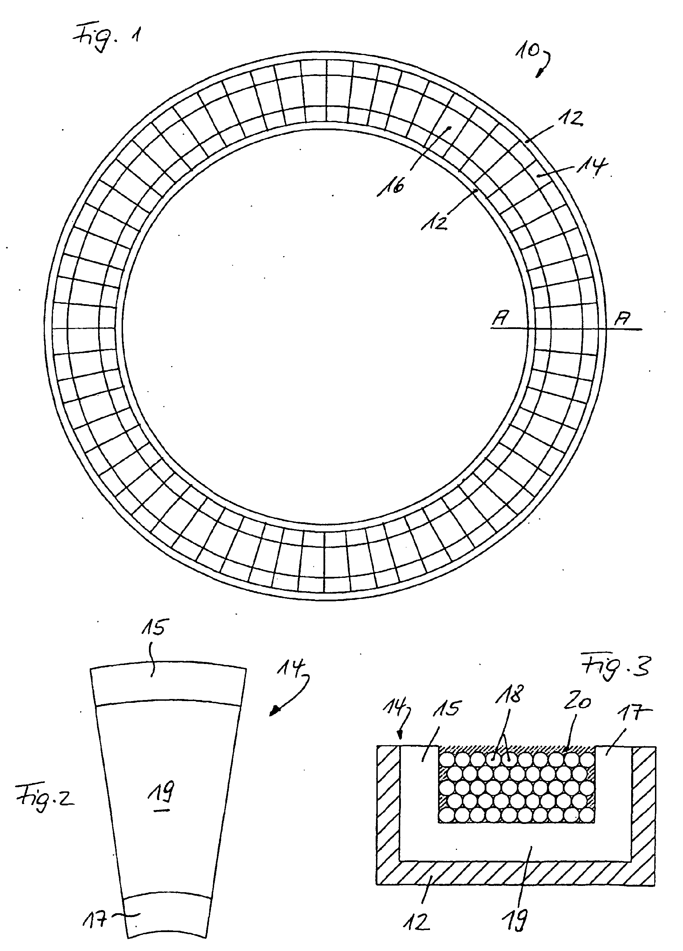

Figur 1 zeigt einen erfindungsgemäßen Ring eines Übertragers 10. Dieser Ring weist eine Tragstruktur 12 auf, in welche Formstücke 14 eingesetzt sind. Diese Formstücke 14 füllen den von der Tragstruktur 12 gebildeten Innenraum vollständig aus, so dass zwischen den einzelnen Formstücken 14 keine Luftspalte vorhanden sind. In den Formstücken 14 ist jeweils eine Nut 16 ausgebildet. Durch die ringförmige Anordnung der Formstücke 14 ergibt sich ebenfalls eine ringförmige Nut 16, in die eine Wicklung eingelegt werden kann.

Figur 2 zeigt ein einzelnes Formstück 14 in der Draufsicht. In dieser Darstellung ist deutlich die kreisringsegmentförmige Form zu erkennen. Das Segment 14 weist einen oberen Steg 15 einen unteren Steg 17 sowie ein dazwischen liegendes Joch 19 auf. Dabei verlaufen die Stege 15, 17 im Wesentlichen senkrecht zu dem Joch 19, so dass sich ein U-förmiger Querschnitt ergibt, wobei die Stege 15, 17 und das Joch 19 die Nut zwischen sich ausbilden.

Dieser U-förmige Querschnitt ist in Figur 3 gut zu erkennen, die eine Querschnittsdarstellung entlang der Schnittlinie A-A in Figur 1 ist. In dieser Figur ist wiederum die Tragstruktur 12, hier ebenfalls mit einem U-förmigen Querschnitt dargestellt, in welche das Formstück 14 eingelegt ist. In dieser Figur ist auch erkennbar, dass das Formstück 14 mit den Stegen 15, 17 und dem Joch 19 einstückig ausgebildet ist. In die Nut ist eine Wicklung 18 eingelegt und der verbleibende Raum innerhalb der Nut ist mit einer Vergussmasse 20 ausgefüllt. Diese Vergussmasse dient einerseits zum Fixieren der Wicklung in der Nut und anderseits verhindert sie ein Eindringen von Feuchtigkeit in die Nut und bildet somit einen Korrosionsschutz.

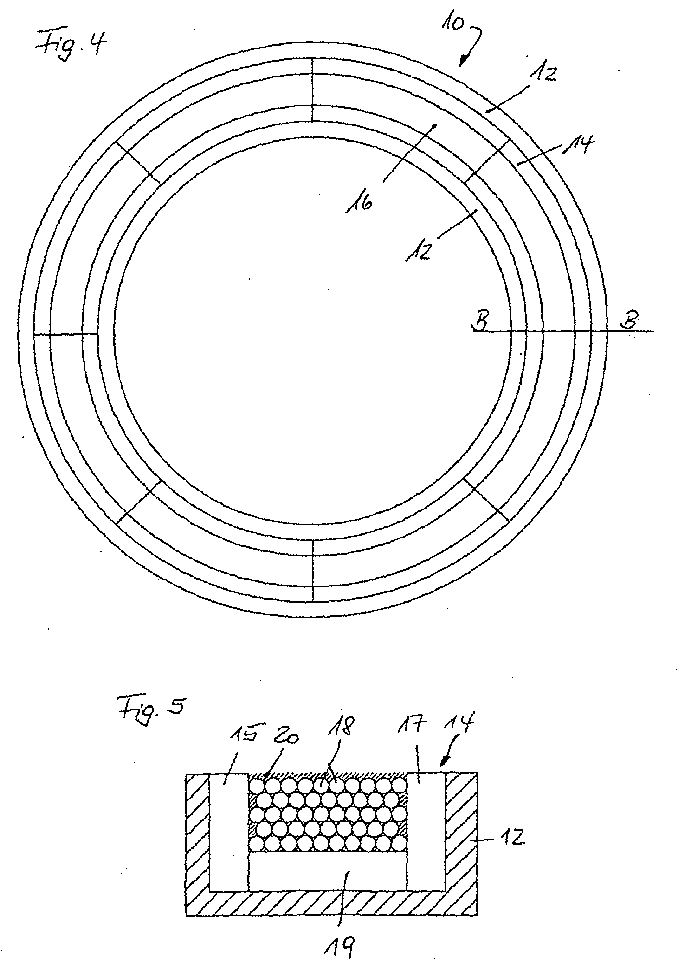

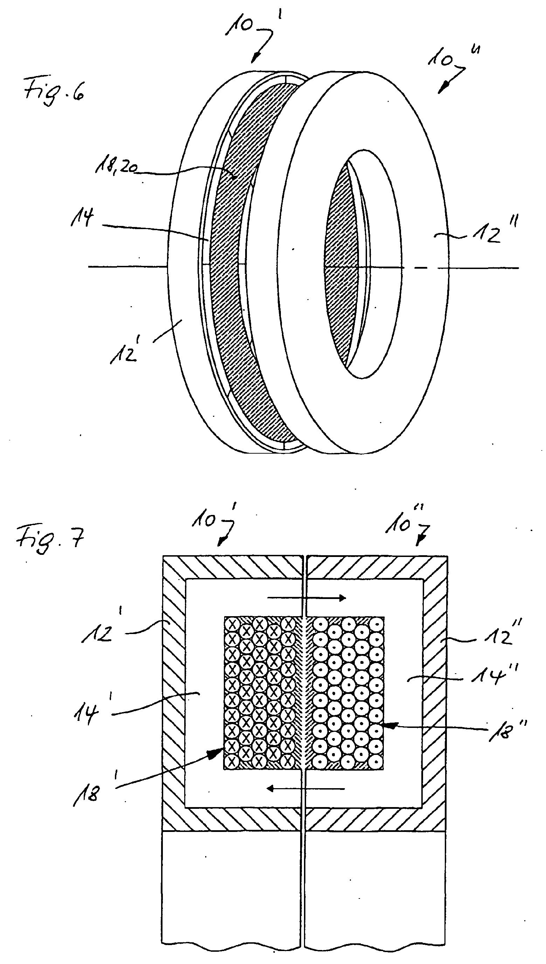

Figur 4 zeigt eine alternative Ausführungsform eines erfindungsgemäßen Übertragerringes 10. Auch hier sind innerhalb der Tragstruktur 12 Formstücke 14 dargestellt. Diese Formstücke 14 sind den in Figur 1 dargestellten Formstücken ähnlich und bilden ebenfalls Kreisringsegmentabschnitte. Hier ist wiederum eine kreisringförmige Nut 16 ausgebildet, in welche eine Wicklung eingelegt werden kann. Neben der Tatsache, dass sich jedes der in Figur 4 darstellten kreisringsegmentförmigen Formstücke 14 über ein größeres Bogenmaß als die in Figur 1 dargestellten erstreckt, ergibt sich ein weiterer Unterschied im Aufbau der Formstücke 14. Dieser Unterschied ist in Figur 5 gut erkennbar.

Figur 5 ist eine Darstellung eines Querschnitts entlang der Linie B-B in Figur 4. Dabei ist in Figur 5 erkennbar, dass wiederum eine U-förmige Tragstruktur 12 vorgesehen ist, in welcher das Formstück 14 aufgenommen ist. Dieses Formstück 14 weist ebenfalls eine U-förmigen Querschnitt auf, allerdings sind der obere Steg 15, der untere Steg 17 sowie das Joch 19 als separate und U-förmig zusammengefügte Teile ausgebildet. Diese Ausführungsform vereinfacht die Herstellung der Stege 15, 17 und des Jochs 19. Zwischen diesen Stegen 15, 17 und dem Joch 19 ist wiederum eine Nut ausgebildet, in der wiederum eine Wicklung 18 untergebracht ist, und die mit einer Vergussmasse 20 vergossen ist.

Figur 6 zeigt zwei sich in axialer Richtung gegenüberliegende Übertragerringe 10. Dabei ist jedoch anzumerken, dass der Abstand, mit dem diese Übertragerringe 10 in dieser Figur dargestellt sind, nur zur Veranschaulichung so groß ist und im Normalbetrieb möglichst klein gehalten wird. In dieser Figur sind wiederum Tragstrukturen 12' und 12" zuerkennen, in denen Formstücke 14 den magnetischen Ring bilden, in welchem in einer Nut die Wicklung 18 und die Vergussmasse 20 eingebaut sind. Einer dieser beiden Übertragerringe 10 ist mit einem feststehenden Teil einer Vorrichtung, z. B. Generator-Stator einer Windenergieanlage, verbunden, während der andere Übertragerring 10 mit einem rotierenden Teil, z. B. dem Polrad eines Ringgenerators verbunden ist. Die Rotationsachse ist durch eine strichpunktierte Linie kenntlich gemacht. Da sich beide Übertragerringe 10 genau gegenüber liegen, kann wie bei einem Transformator Energie von der Primärwicklung durch den magnetischen Kreis in die Sekundärwicklung übertragen werden.

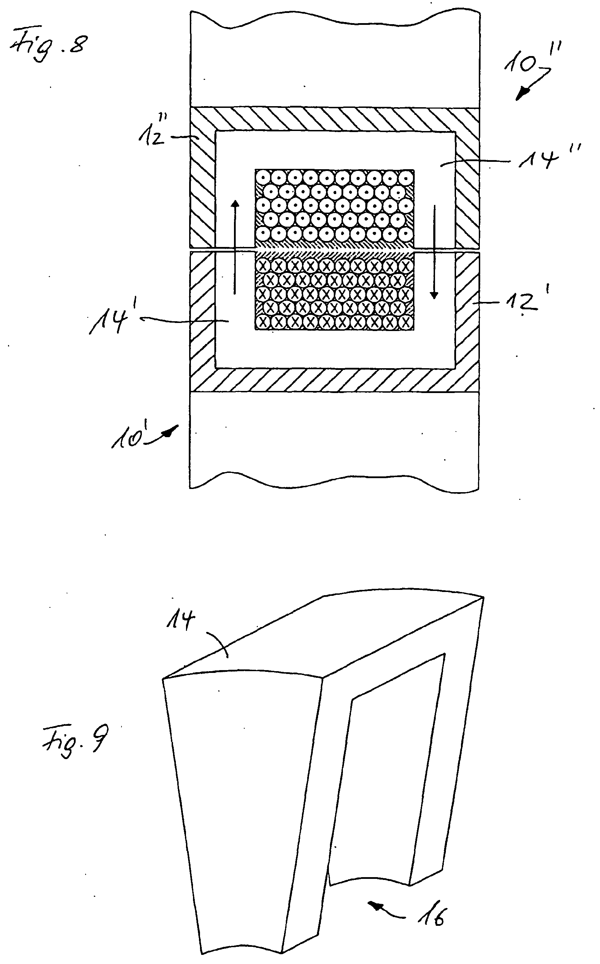

Dies wird anhand von Figur 7 weiter verdeutlicht. Diese Figur zeigt eine Querschnittsansicht durch den oberen Teil zweier sich gegenüberliegender Übertragerringe 10. Beide Übertragerringe 10', 10" weisen eine Tragstruktur 12', 12" auf, in welcher aus Formstücken 14' 14", die hier einstückig dargestellt sind, der magnetische Kreis gebildet ist. Dabei ist es wichtig, dass der Abstand zwischen den einander gegenüberliegenden Formstücken und damit der Luftspalt in dem magnetischen Kreis möglichst gering z.B. 0,1mm - 10mm ist. In jeder der von den Formstücken 14', 14" gebildeten Nuten sind Wicklungen 18', 18" angeordnet. Dabei sei in dieser Figur die links dargestellte Wicklung 18' die Primärwicklung und die rechts dargestellte Wicklung 18" sei die Sekundärwicklung. In der Primärwicklung ist die Stromflussrichtung von dem Betrachter fort o dargestellt. Dadurch ergibt sich in dem aus den Formstücken 14', 14" gebildeten magnetischen Kreis ein magnetisches Feld mit der durch die Pfeile dargestellten Orientierung. Dieses magnetische Feld induziert in der Sekundärwicklung 18" eine Spannung, die zu einem Stromfluss in einer Richtung o auf den Betrachter zu führt. Auf diese Weise wird durch diesen Übertrager elektrische Energie von der Primärseite (links) zur Senkundärseite (rechts) übertragen.

Figur 8 zeigt ebenfalls zwei Übertragerringe 10. Diese sind jedoch so angeordnet, dass sie sich in radialer Richtung gegenüberliegen. Auch hier sind wieder Tragstrukturen 12', 12" vorgesehen, welche einstückig ausgebildete Formstücke 14', 14" tragen, die wiederum den magnetischen Kreis bilden. In dieser Figur 8 sei die untere Wicklung die Primärwicklung und die obere Wicklung die Sekundärwicklung. Die Stromflussrichtung in der Primärwicklung sei wiederum vom Betrachter fort. Dadurch wird in dem magnetischen Kreis wiederum ein magnetisches Feld mit der durch die Pfeile angedeuteten Orientierung erzeugt, welches in der Sekundärwicklung wiederum eine Spannung induziert, die einen Stromfluss mit einer Richtung auf den Betrachter zu bewirkt. Auch bei dieser radialen Anordnung muss der Abstand zwischen den Formstücken 14' 14" des magnetischen Kreises und damit der Luftspalt in dem magnetischen Kreis möglichst gering z.B. 1mm - 3mm sein.

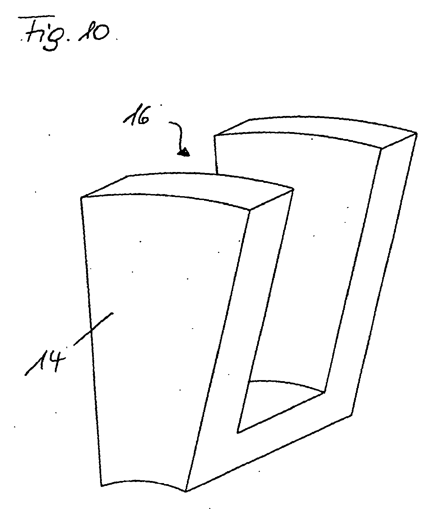

Figur 9 zeigt in einer vereinfachten perspektivischen Darstellung ein Formstück 14. Aus der Form dieses Formstückes 14 geht augenfällig hervor, dass eine Aneinanderreihung mehrerer Formstücke einen Ring mit einer nach unten offenen Nut 16 ergibt. Demnach werden derart ausgebildete Formstücke 14 in der oberen Tragstruktur 12 in Figur 8 eingesetzt und bilden einen Ring mit einer nach unten offenen Nut 16.

Figur 10 zeigt ebenfalls eine vereinfachte perspektivische Darstellung eines Formstückes 14. Dieses Formstück 14 wird in die in Figur 8 untere Tragstruktur 12 eingesetzt und bildet somit einen Ring mit einer nach oben offenen Nut.

Durch die Verwendung der in den Figuren 9 und 10 dargestellten Formstücke läßt sich somit ein erfindungsgemäßer Übertrager herstellen, dessen Ringe einander radial gegenüberliegen.

Der erfindungsgemäße Übertrager soll beispielsweise für den Betrieb eines Generators, z.B. eine Synchronmaschine dafür eingesetzt werden, um die elektrische Regelleistung in den Läufer (Rotor) des Generators einzuspeisen. Diese Leistung kann beispielsweise im Bereich von über 50 KW, vorzugsweise im Bereich von etwa 80 KW bis 120 KW liegen.

Der besondere Vorteil des erfindungsgemäßen Übertagers besteht darin, dass der bisherige Schleifringläufer, mittels denen elektrische Erregerleistung auf den Läufer (Rotor) des Generators gebracht wird, nicht mehr notwendig sind und somit ein bisheriger Verschleißpunkt der Windenergieanlage vermieden wird. Da die elektrische Erregerleistung bei dem erfindungsgemäßen Übertrager drahtlos übertragen wird, tritt auch kein entsprechender Verschleiß auf.

Ein erfindungsgemäßer elektrischer Übertrager lässt sich insbesondere bei Synchrongeneratoren/Ringgeneratoren einsetzen. Solche Generatoren haben bereits bei Leistungen von über 500 KW einen relativ großen Durchmesser z.B. mehr als 4m und bieten daher ausreichend Platz, den erfindungsgemäßen Übertrager dort unterzubringen.

## Patentansprüche

1. Übertrager zum Übertragen elektrischer Energie von einem stehenden Teil auf ein drehendes Teil mit einem ringförmigen Wickelkörper zur Aufnahme einer ringförmigen Wicklung mit in axialer oder radialer Richtung offenen ringförmigen Nuten (16) und mit ringförmig ausgebildeten und in den ringförmigen Nuten (16) angeordneten Primär- und Sekundär-Wicklungen (18, 18"), wobei sich die Primär- und Sekundär-Wicklungen (18', 18") axial oder radial gegenüberliegen und die Primärwicklung (18') auf dem stehenden Teil und die Sekundärwicklung (18") auf dem drehenden Teil angeordnet ist,
**dadurch gekennzeichnet, dass** der Wickelkörper aus einstückig kreissegmentförmig ausgebildeten, einen U-förmigen Querschnitt aufweisenden Formstücken (14) gebildet ist.

2. Übertrager nach einem der vorstehenden Ansprüche,
**gekennzeichnet durch** eine die Formstücke (14) aufnehmende Tragstruktur (12).

3. Übertrager nach einem der vorstehenden Ansprüche,
**dadurch gekennzeichnet, dass** das Material der Formstücke (14) Ferrit ist.

4. Übertrager nach einem der vorstehenden Ansprüche,
**dadurch gekennzeichnet, dass** die Formstücke (14) aus Ringbandkemen gebildet sind.

5. Windenergieanlage mit wenigstens einem Übertrager nach einem der vor stehenden Ansprüche.

6. Windenergieanlage nach Anspruch 5,
ferner mit einem Synchrongenerator, bei welchem der nach einem der Ansprüche 1 bis 4 beschriebene Übertrager eingesetzt wird, um für den Betrieb des Generators notwendige Erregerleistung auf den drehenden Teil des Generators zu übertragen.

7. Verfahren zum Betreiben eines Übertragers nach einem der Ansprüche 1 bis 4,
**gekennzeichnet durch** eine Frequenz bis zu 300 kHZ, bevorzugt etwa 20 kHZ.

8. Generator, vorzugsweise Synchrongenerator, einer Windenergieanlage,
bei welchem der nach einem der Ansprüche 1 bis 4 beschriebene Übertrager eingesetzt wird, um für den Betrieb des Generators notwendige Erregerleistung auf den drehenden Teil des Generators zu übertragen.

## Claims

1. A transformer for transferring electrical energy from a stationary part to a rotating part, comprising an annular core form for receiving an annular winding and having annular grooves (16) which are open in the axial or radial direction, and comprising primary and secondary windings (18, 18") of annular shape which are disposed in the annular grooves (16), the primary and secondary windings (18', 18") being disposed axially or radially opposite each other and the primary winding (18') being disposed on the stationary part and the secondary winding (18") being disposed on the rotating part,
**characterised in that** the core form is composed of shaped elements (14) formed in one piece having the shape of a segment of a circle and having a U-shaped cross-section.

2. A transformer according to any one of the preceding claims,
**characterised by** a support structure (12) which receives the shaped elements (14).

3. A transformer according to any one of the preceding claims,
**characterised in that** the material of the shaped elements (14) is ferrite.

4. A transformer according to any one of the preceding claims,
**characterised in that** the shaped elements (14) are composed of toroidal tape cores.

5. A wind turbine having at least one transformer according to any one of the preceding claims.

6. A wind turbine according to claim 5,
further having a synchronous generator in which the transformer described according to any one of claims 1 to 4 is used to transfer excitation power necessary for operating the generator to the rotating part of the generator.

7. A method for operating a transformer according to any one of claims 1 to 4,
**characterised by** a frequency of up to 300 kHz, preferably approximately 20 kHz.

8. A generator, preferably a synchronous generator, of a wind turbine, in which generator the transformer described according to any one of claims 1 to 4 is used to transfer excitation power necessary for operating the generator to the rotating part of the generator.

## Revendications

1. Transformateur servant à transmettre l'énergie électrique d'une pièce fixe à une pièce rotative avec un corps de rotation circulaire permettant le logement d'un enroulement circulaire avec des rainures circulaires (16) ouvertes dans le sens axial ou radial et avec des enroulements primaires et secondaires (18, 18") de forme circulaire et disposés dans les rainures circulaires (16), les enroulements primaires et secondaires (18', 18") se faisant face axialement ou radialement et l'enroulement primaire (18') étant disposé sur la pièce fixe et l'enroulement secondaire (18") sur la pièce rotative,
**caractérisé en ce que** le corps de rotation est formé de pièces profilées (14) conçues en forme de segments de cercle et présentant une section en forme de U.

2. Transformateur selon l'une quelconque des revendications précédentes, **caractérisé par** une structure portante (12) supportant les pièces profilées (14).

3. Transformateur selon l'une quelconque des revendications précédentes, **caractérisé en ce que** le matériau des pièces profilées (14) est la ferrite.

4. Transformateur selon l'une quelconque des revendications précédentes, **caractérisé en ce que** les pièces profilées (14) sont formées à partir de tores enroulés.

5. Installation d'énergie éolienne avec au moins un transformateur selon l'une quelconque des revendications précédentes.

6. Installation d'énergie éolienne selon la revendication 5,
dotée en outre d'un générateur synchrone sur lequel est utilisé le transformateur décrit selon l'une des revendications 1 à 4 pour transmettre la puissance d'excitation nécessaire au fonctionnement du générateur à la pièce rotative du générateur.

7. Procédé permettant le fonctionnement d'un transformateur selon l'une des revendications 1 à 4, **caractérisé par** une fréquence atteignant 300 kHZ, de préférence d'environ 20 kHZ.

8. Générateur, de préférence générateur synchrone, d'une installation d'énergie éolienne sur lequel est utilisé le transformateur décrit selon l'une des revendications 1 à 4 pour transmettre la puissance d'excitation nécessaire au fonctionnement du générateur à la pièce rotative du générateur.
